# EUROPEAN PATENT APPLICATION

(11) **EP 2 608 007 A2**
(43) Date of publication of application: **26.06.2013**
(21) Application number: 12197816.7
(22) Date of filing: 18.12.2012
(51) Int. Cl.: G06F 3/0483, G06F 3/0488

(54) **Method and apparatus for providing a multi-touch interaction in a portable terminal**

(30) Priority: 19.12.2011 KR 20110137241
(71) Applicant: Samsung Electronics Co., Ltd, Gyeonggi-do 443-742 (KR)
(72) Inventor: Kim, Seonhwa, 443-742 Gyeonggi-do, (KR); Kang, Jiyoung, 443-742 Gyeonggi-do (KR); Kim, Kyunghwa, 443-742 Gyeonggi-do, (KR); Shin, Dongjun, 443-742 Gyeonggi-do (KR)
(74) Representative: Harrison Goddard Foote LLP

(57) **Abstract**

A method of providing a multi touch interaction in a portable terminal includes receiving a first touch input, performing a first function 5corresponding to the received first touch input, receiving a second touch input when the first touch input is maintained, and performing a second function corresponding to the received second touch input while maintaining a movement of at least one specific object selected by the first touch input.

## Description

### BACKGROUND OF THE INVENTION

### Field of the Invention

The present invention relates generally to a method and an apparatus for providing a multi touch interaction, and more particularly, although not exclusively, to a method and an apparatus for providing a multi touch interaction in a portable terminal for controlling the portable terminal more conveniently and intuitively.

### Description of the Related Art

The use and distribution of portable terminals has rapidly increased due to remarkable development of information and communication technology and semiconductor technology. Accordingly, a portable terminal has become a necessity for many in modern life. In addition to a general communication function, for example a voice call or a message service, a typical portable terminal provides various additional functions, for example a TV service function (e.g., mobile broadcasting such as digital multimedia broadcasting (DMB) or digital video broadcasting (DVB)), a music reproducing function (e.g., MPEG Audio Layer-3 (MP3)), a picture photographing function, a data communication function, an internet access function, and a short range wireless communication function.

As portable terminals support various functions, a method for controlling the portable terminal more promptly and conveniently is needed. Especially, as more portable terminals are implemented with a touch screen, there exists an increasing demand for enhanced user control interface using a touch interaction.

### SUMMARY OF THE INVENTION

It is an aim of certain embodiments of the present invention to address, solve, mitigate or obviate, at least partly, at least one of the problems and/or disadvantages associated with the related art, including the above problems. Certain embodiments aim to provide additional advantages, including at least one of the advantages described below. Accordingly, certain embodiments provide a method and an apparatus for providing a multi touch interaction in a portable terminal capable of controlling the portable terminal more conveniently and intuitively through a multi touch interaction inputted at different time points.

Certain embodiments of the present invention further provide a method and an apparatus for providing a multi touch interaction in a portable terminal capable of individually processing a multi touch interaction comprising touches inputted in a consecutive order.

Certain embodiments of the present invention further provide a method and an apparatus for providing a multi touch interaction in a portable terminal capable of selecting a specific object through a first touch input and performing a function related to the selected object through a second touch input.

In accordance with an aspect of the present invention, a method for providing a multi touch interaction for a portable terminal comprises: receiving a first touch input; performing a first function corresponding to the received first touch input; receiving a second touch input while the first touch input is maintained; and performing a second function corresponding to the received second touch input.

In accordance with another aspect of the present invention, an apparatus for providing a multi touch interaction for a portable terminal comprises: a touch panel configured for receiving a touch input; and a controller configured for performing a first function corresponding to a received first touch input when the first touch input is received from the touch panel, and configured for performing a second function corresponding to a received second touch input when the second touch input is received while the first touch input is maintained.

Another aspect of the present invention provides a computer program comprising instructions arranged, when executed, to implement a method and/or apparatus, in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects of the present invention, and features and advantages of certain exemplary embodiments and aspects of the present invention, will be more apparent from the following detailed description when taken in conjunction with the accompanying drawings, in which:
FIG. 1 is a block diagram illustrating a schematic configuration of a portable terminal according to an exemplary embodiment of the present invention;
FIG. 2 is a detailed view illustrating a controller of a portable terminal according to an exemplary embodiment of the present invention;
FIG. 3 is a flowchart illustrating a method of providing a multi touch interaction of a portable terminal according to an exemplary embodiment of the present invention;
FIGS. 4A and 4B are example screen views illustrating an example of moving an icon in a home screen through a multi touch interaction according to an exemplary embodiment of the present invention;
FIG. 5 is an example screen view illustrating an example of changing an arrangement of an item in a list screen through a multi touch interaction according to an exemplary embodiment of the present invention; and
FIGS. 6A and 6B are example screen views illustrating an example of providing a bookmark function in an electronic book screen through a multi touch interaction according to an exemplary embodiment of the present invention.

### DETAILED DESCRIPTION OF EXEMPLARY EMBODIMENTS

Hereinafter, exemplary embodiments of the present invention are described with reference to the accompanying drawings in detail. The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar reference numbers may be used in the drawings to refer to the same or similar parts or components although they may be illustrated in different drawings. For the purposes of clarity, conciseness and simplicity, detailed descriptions of well-known functions, processes, constructions and structures incorporated herein may be omitted to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

The present invention is applicable to any suitable device comprising a touch screen for recognizing a multi touch. A multi touch may be a touch comprising two or more individual touches applied to the touch screen, where the individual touches may be applied sequentially and/or simultaneously. For example, certain exemplary embodiments comprise a portable terminal comprising a device equipped with a touch screen for recognizing a multi touch. A portable terminal in various embodiments of the present invention may comprise, for example, a personal digital assistant (PDA), a mobile communication terminal, a smart phone, a tablet personal computer (PC), a tabletop, a portable multimedia player (PMP), or a laptop. Furthermore, the present invention may be applied to any suitable electronic device having a relatively large screen, for example, a large format display (LFD), an electronic blackboard, or a touch monitor.

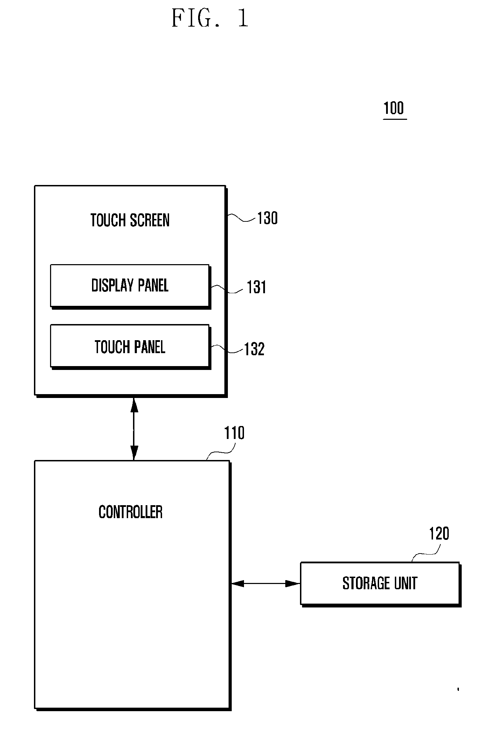

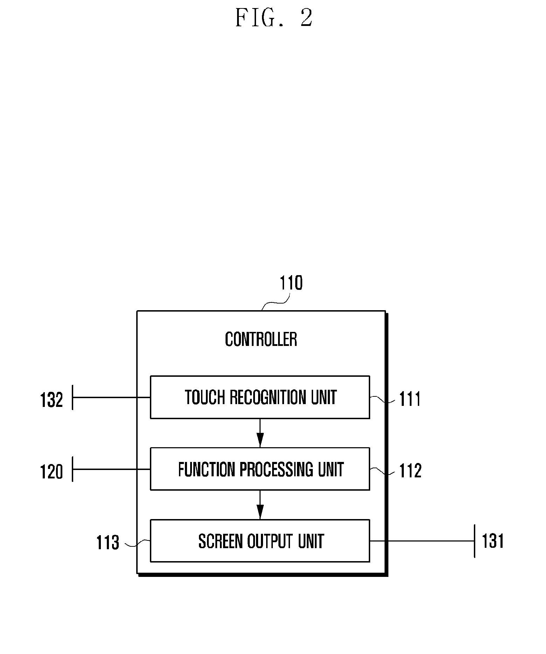

FIG. 1 is a block diagram illustrating a schematic configuration of a portable terminal according to an exemplary embodiment of the present invention, and FIG. 2 is a detailed view illustrating a controller of a portable terminal according to an exemplary embodiment of the present invention.

Referring to FIGS. 1 and 2, a portable terminal 100 according to an exemplary embodiment of the present invention may include a touch screen 130, a storage unit 120, and a controller 110. The touch screen 130 may include a display panel 131 and a touch panel 132, and the controller 110 may include a touch recognition unit 111, a function processing unit 112, and a screen output unit 113.

The touch screen 130 may perform an input function and a display function. To this end, the touch screen 130 may include the display panel 131 and the touch panel 132.

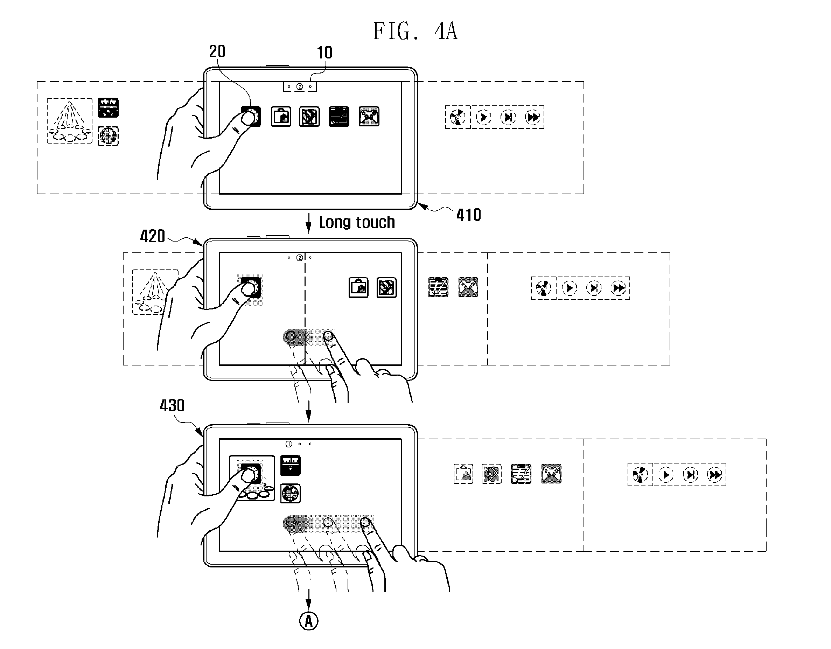

The display panel 131 displays information, for example information inputted by a user or information to be provided to the user as well as various menus of the portable terminal 100. For example, the display panel 131 may provide various screens according to use and/or modes of the portable terminal 100, for example, a home screen page, a message writing screen, a call screen, a list screen, or a content (e.g., electronic book) execution screen. In particular, the display panel 131 according to an exemplary embodiment of the present invention may provide various screens controlled through a multi touch interaction comprising touches inputted at different time points (e.g. the touches may be initiated at different times, even though the touches may be subsequently maintained at the same time). A detailed description of the various screens will be made with reference to FIGS. 4A through 6B. The display panel 131 may be in the form of, for example, a liquid crystal display (LCD), an organic light emitted diode (OLED), or an active matrix organic light emitted diode (AMOLED).

The touch panel 132 is mounted on a top surface of the display panel 131 and may generate a touch event when a touch input device, for example, a user's finger or a stylus, contacts thereto and transmit the generated touch event to the controller 110. Specifically, the touch panel 132 may recognize a touch based on a change in a physical quantity, (e.g., a capacitance or a resistance) according to a contact by the touch input device and transmit touch location information to the controller 110. Such touch panel 132 is well known to those skilled in the art, and thus a detailed description thereof will be omitted.

The storage unit 120 may store one or more programs required for operating one or more functions according to an exemplary embodiment of the present invention. The storage unit 120 may also store data, for example user data, etc. For example, the storage unit 120 may store a program for controlling an overall operation of the portable terminal 100, an operating system (OS) for booting the portable terminal 100, application programs for one or more optional functions, for example, a camera function, a sound reproducing function, an image or video reproducing function, or a short range communication function, and multiple contents. Also, the storage unit 120 may store a key map or a menu map for operating the touch screen 130. Here, the key map and the menu map may be configured in various forms. For example, the key map may be a keyboard map, a 3*4 key map, a QWERTY key map, or a control key map for controlling an operation of an application program that is currently activated. Also, the menu map may be a menu map for controlling an operation of an application program that is currently activated. In particular, the storage unit 120 according to an exemplary embodiment of the present invention may store an application program for recognizing a multi touch interaction comprising touches inputted at different time points, and for controlling an operation of a function of the portable terminal 100 according to the recognized multi touch interaction. The application program may include, for example, a touch recognition routine for recognizing the touch event, a function processing routine for processing a function according to the recognized touch event, and a screen output routine for outputting a screen according to the function processing.

The controller 110 may control an overall operation of the portable terminal 100 and control a signal flow between internal blocks of the portable terminal 100. In particular, the controller 110 according to certain embodiments of the present invention may recognize the multi touch interaction comprising touches inputted at different time points, and control a function thereof. To this end, the controller 110 may include the touch recognition unit 111, the function processing unit 112, and the screen outputting unit 113.

The touch recognition unit 111 may recognize a type of the touch event such as, for example, a touch, touch release, a tap, a double (or triple, etc.) touch, touch movement (e.g., a drag, a flick), a multi touch, based on information inputted from the touch panel 132. Here, the touch indicates a state in which the touch input device (e.g. user's finger or stylus) contacts the touch panel 132 and the touch release indicates a state in which a contact to the touch panel 132 by the touch input device is released. A tap event is a touch event in which the touch is released a certain period of time after the touch is made, the double (or triple, etc.) touch indicates a touch event in which two (three, etc.) tap events are consecutively generated, a long touch indicates a touch event in which the touch is maintained for a predetermined time or more, and the touch movement indicates a touch event in which a certain point is touched and the touch is moved to another point (e.g. while contact between the touch input device and the touch panel 132 is maintained). The touch movement may include a drag event that moves at a speed lower than a reference speed, and a flick event that moves at a speed equal to or greater than the reference speed. The multi touch indicates a touch event in which at least two touch events are generated. Particularly, the touch recognition unit 111 of the present invention may recognize a multi touch comprising touches inputted at different time points, and transmit the multi touch to the function processing unit 112.

The function processing unit 112 may perform a function corresponding to the touch event recognized by the touch recognition unit 111. In particular, the function processing unit 112 according to certain embodiments of the present invention may perform a first function upon receiving a first touch, and, when a second touch is received in a state where the first function is performed, i.e., the first touch is maintained, the function processing unit 112 may perform a second function corresponding to the second touch. Here, the second function may be a function related to the first function executed by the first touch. For example, when a location of an icon included in a home screen needs to be changed, the first touch may be a long touch event that selects the icon and causes entering into an editing mode, and the second touch may be a touch movement event that requests output of another page of the home screen. Alternatively or additionally, when changing an arrangement of an item included in the list screen, a first touch input may be a long touch event that selects the item and causes entering into the editing mode, and a second touch input may be a touch movement event that scrolls a list. Alternatively or additionally, when providing a bookmark function in an electronic book content execution screen, the first touch input may be a long touch event that selects a particular page to which a bookmark is to be added, and the second touch input may be a touch movement event that requests page movement of an electronic book. A detailed description thereof will be described with reference to FIGS. 4A through 6B.

The screen output unit 113 may control a screen output of the display panel 131. The screen output unit 113 may transmit data corresponding to a function execution screen executed by the function processing unit 112 to the display panel 131. Namely, the screen output unit 113 may control the display panel 131 to output a screen as shown in FIGS. 4A thorough 6B.

Although not shown in FIG. 1, the portable terminal 100 according to certain embodiments of the present invention may selectively further include other elements for providing additional functions such as, for example, a camera module for capturing an image or a video, a broadcast receiving module for receiving a broadcast, a digital sound source reproducing module such as an MP3 module, and a proximity sensor module for proximity sensing. With the convergence of digital devices, there are many types of digital device and modifications thereof, not specifically listed herein to which the present invention may be applied. It will be appreciated that elements equivalent to the elements described herein may be included in embodiments of the present invention, including the portable terminal 100 described above.

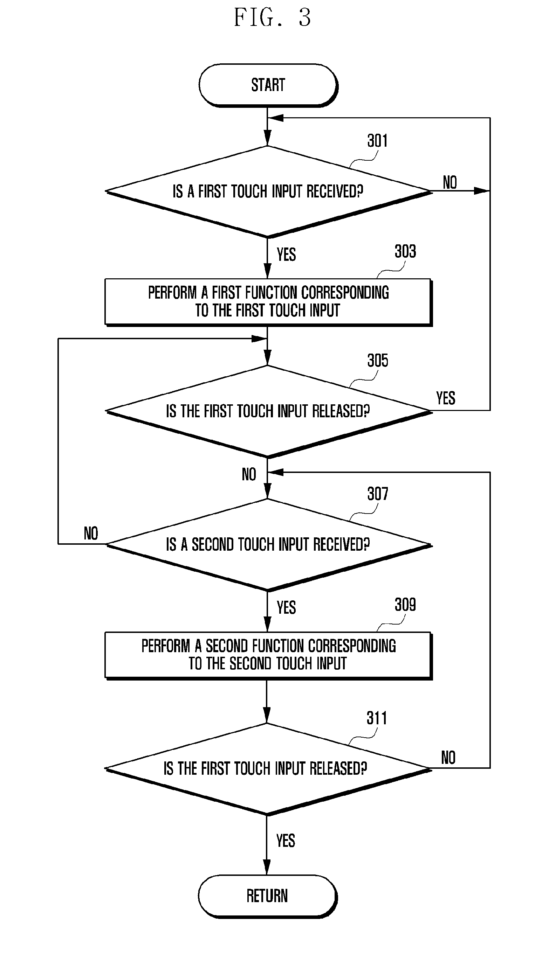

FIG. 3 is a flowchart illustrating a method for providing a multi touch interaction for a portable terminal according to an exemplary embodiment of the present invention.

Referring to FIGS. 1 thorough 3, the controller 110 according to an exemplary embodiment of the present invention may identify whether the first touch input is received (step 301). When the first touch input is not received, the controller 110 may maintain step 301 in a stand by mode to receive the first touch input. On the other hand, when the first touch input is received, the controller 110 may perform the first function corresponding to the first touch input (step 303). For example, the touch input may be a long touch event that selects an object, and the first function may be a function of performing the editing mode or adding the bookmark in response to the first touch input. An illustrative detailed description thereof will be made later with reference to example screen views of FIGS. 4A thorough 6B.

Thereafter, the controller 110 may identify whether the first touch input is released (step 305). When the first touch input is released, the controller may return to step 301. On the other hand, when the first touch input is not released, the controller 100 may identify whether the second touch input is received (step 307). When the second touch input is not received, the controller 110 may return to step 305. On the other hand, when the second touch input is received, the controller 110 may perform the second function corresponding to the second touch input (step 309). The second touch input may be a touch movement event, and the second function may be a function related to the first function. Again, an illustrative detailed description thereof will be made later with reference to example screen views of FIGS. 4A thorough 6B.

Next, the controller 110 may identify whether the first input is released (step 311). When the first touch input is not released in step 311, the controller 110 may return to step 307 and, when the first touch input is released, the controller 110 may return to step 301 to repeat the above process.

Hereinafter, aspects of the present invention will be described in more detail through various exemplary embodiments.

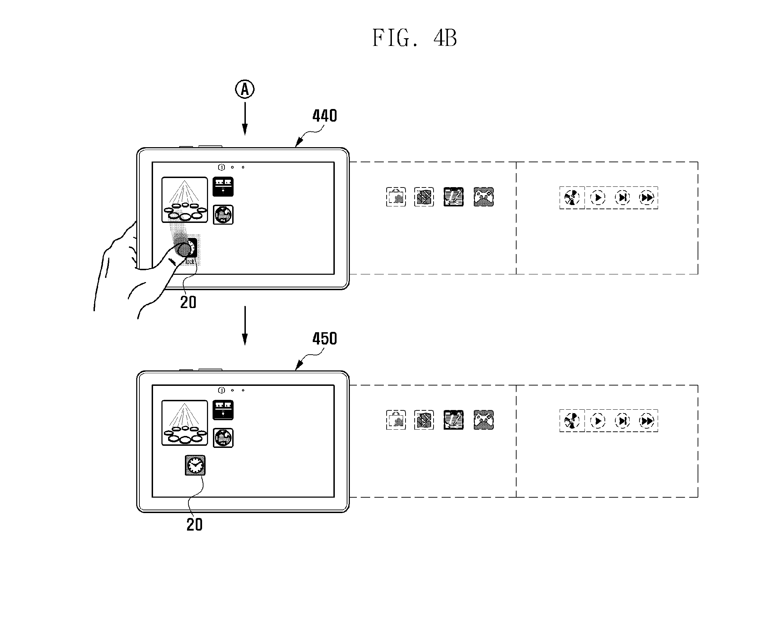

FIGS. 4A and 4B are example screen views illustrating an example of moving an icon in a home screen through a multi touch interaction according to an exemplary embodiment of the present invention.

Referring to FIGS. 1 through 4B, the controller 110 according to an exemplary embodiment of the present invention may output a home screen 410. The home screen 410 may include various pages, and each page of the home screen may include a plurality of icons, for example, a content icon, a widget icon, a shortcut icon, and a folder icon. Here, an upper portion of the home screen may display a page information indicator 10 for indicating a total number of pages and a current page number. The page information indicator 10 may be fixed regardless of movement of a page displayed on the screen. Referring to the page information indicator 10 in the example screen view identified by reference number 410, it can be known that the home screen of the portable terminal 100 includes three pages and a second page is currently outputted. Here, a first page and a third page, which are displayed in Figure 4A virtually by dotted lines, are not shown to the user.

In the example screen view identified by reference number 410, the user may touch (a first touch), as shown by the left thumb in screen view 410, a specific icon 20 for a period longer than a threshold time which in turn triggers a location movement event. That is, when the long touch event on the specific icon 20 is received, the controller 110 may perform the editing mode for changing the location of the icon. When the editing mode is triggered, the controller 110 may change the specific icon 20 into a floating state as shown in an example screen view identified by reference number 420 and highlight the specific icon 20 to notify the user that the editing mode is executed.

When the editing mode is executed and a touch movement event (a second touch) requesting to move the screen is inputted from an area other than the touched point, as shown by the right index finger in screen view 420, the controller 110 may perform a screen movement function according to a touch movement direction as shown in an example screen view identified by reference number 420 and finally by an example screen view identified by reference number 430. Here, the specific icon 20 that is floated or held by a left thumb is not moved. As the right index finger moves to the right, the content of previous first screen is moved to the current screen. As a result, as shown by screen 430, the icon 20 is moved to the first page of the home screen, and the specific icon 20 no longer exists in the second page.

In a state where a touch on the specific icon 20 is maintained and another page of the home screen is outputted through the touch movement event as described above, when the touch on the specific icon 20 is released, the controller 110 may change a location of the specific item 20 to a location in which the touch is released. For example, as shown in an example screen view identified by reference number 440 and an example screen view identified by reference number 450, the user may move the specific icon 20 to a location the user desires in the first page and release the touch.

Accordingly, through the first touch input that selects the icon of which location is to be moved in the home screen and the second touch input that requests to move to another page of the home screen, the location of the icon included in the original home screen may be easily changed. Note that, in this embodiment, the second touch input is inputted while the first touch input is maintained.

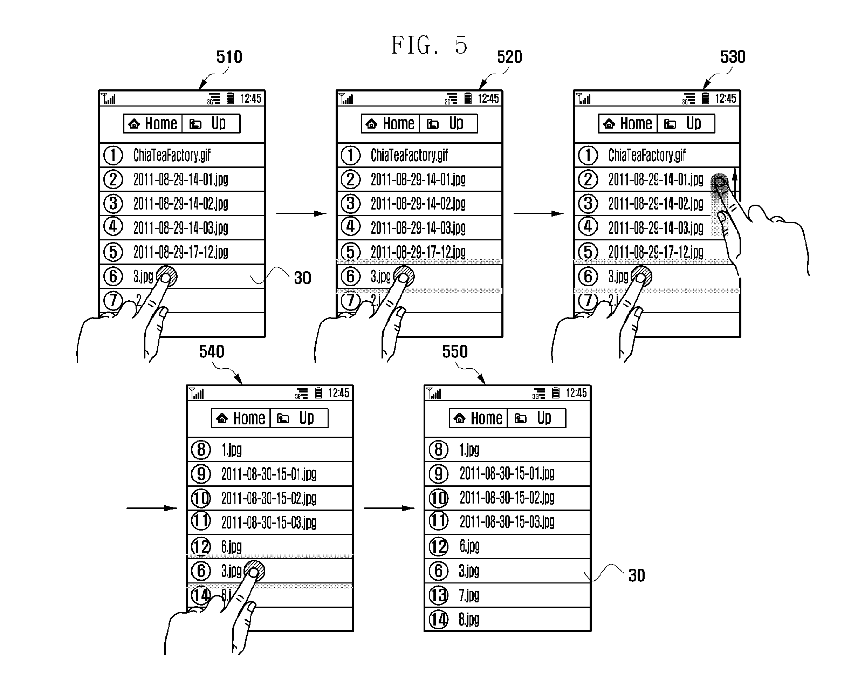

FIG. 5 is an example screen view illustrating an example of changing an arrangement of an item in a list screen through a multi touch interaction according to an exemplary embodiment of the present invention.

Referring to FIGS. 1 through 5, the controller 110 according to an exemplary embodiment of the present invention may output a list screen as shown in an example screen view identified by reference number 510. The list screen may be a screen that outputs a content list such as a music file, a picture file, or a video file. Meanwhile, in the list screen shown in the example screen view identified by reference number 510, a plurality of items is arranged in a vertical direction. However, the present invention is not limited to this. Namely, various embodiments of the present invention may be applied to any list screen in which a plurality of items is arranged in at least one of a horizontal direction and a vertical direction, or any combination of alternative or additional directions.

In the example screen view identified by reference number 510, the user may touch (a first touch) a specific item 30 of the arrangement of items (at a certain location) for a a predetermined time or more. When the first touch input is received, the controller 110 may perform the editing mode. When the editing mode is executed, the controller 110 may change the specific item 30 into a floating state as shown in the example screen view identified by reference number 520 and highlight the specific item 30 to notify the user that the editing mode is executed.

In a state where the editing mode being executed, when a touch movement event (a second touch) requesting to move the screen is inputted from an area other than the touched point, the controller 110 may perform a list movement (or scroll) function according to a touch movement direction as shown in an example screen view identified by reference number 530. Here, the touched specific item 30 is not moved, and the controller 110 may output a list screen that is scrolled according to the touch movement event as shown in a screen example view identified by reference number 540.

When the list screen is moved (or scrolled) and the touch on the specific item 30 is released, the controller 110 may change the location of the particular item 30 to a location where the touch is released. Namely, as shown in a screen example view identified by reference number 550, the controller 110 may move the specific item 30 to be between an item "6.jpg" and an item "7.jpg".

Thus, according to certain embodiments of the present invention, through the first touch input that selects a specific item in the list, and the second touch input that scrolls the list, an arrangement of an item in the list screen may be easily changed. Here, in this embodiment, the second touch input is inputted while the fist touch input is maintained.

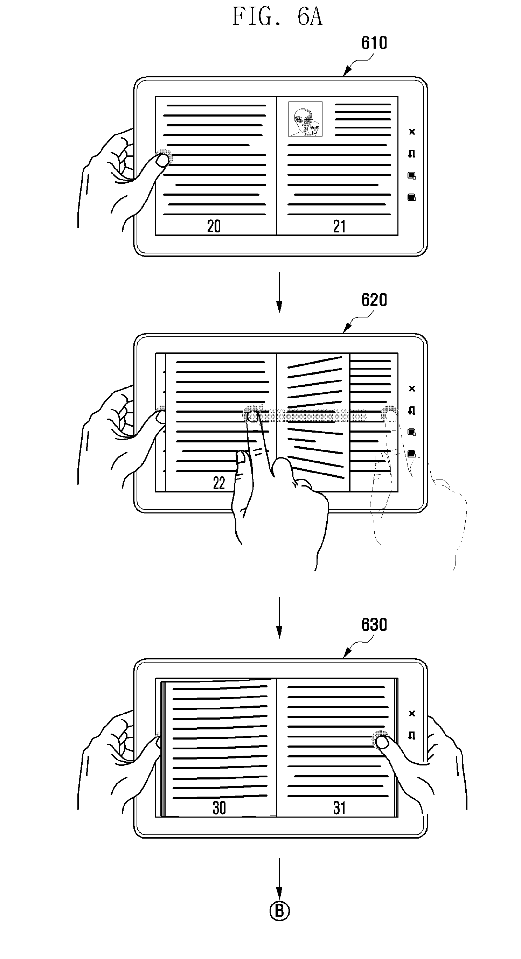

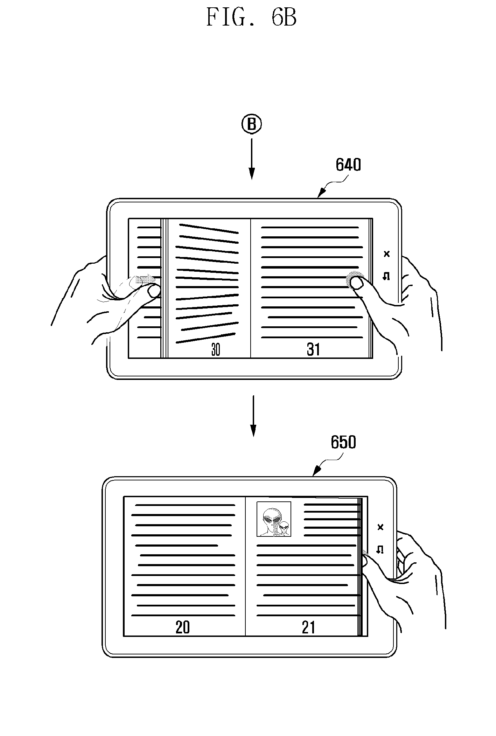

FIGS. 6A and 6B are example screen views illustrating an example of providing a bookmark function in an electronic book screen through a multi touch interaction according to an exemplary embodiment of the present invention.

Referring to FIGS. 1 through 6B, the controller 110 according to an exemplary embodiment of the present invention may execute an electronic book content according to a user request. When the electronic book content is executed, the controller 110 may output an electronic book content execution screen as shown in a screen example view identified by reference number 610.

In the electronic book content execution screen, when one side of a specific page is touched (a first touch), the controller 110 may add a first bookmark to the touched specific page (e.g., page 20). Here, the bookmark may be a temporary bookmark that is deleted when the first touch is released. The temporary bookmark may be stored, for example, in the storage unit 120 or a buffer (not shown) included in the controller 110.

In a state where the first touch is maintained, when the touch movement event (a second touch) is generated in the electronic book content execution screen, the controller 110 may perform a page movement function as shown in an example screen view identified by reference number 620. Referring to page information of an example screen view identified by reference number 620 and an example screen view identified by reference number 630, the user may add the first bookmark to the page 20 through the first touch and move the page to output pages 30-31 through multiple touch movement.

After moving to the pages 30-31 according to the touch movement event, when the user touches (a third touch) one side of the page 31 of the electronic book as shown in the example screen view identified by reference number 630, the controller 110 may add a second bookmark to the touched page 31. Note that, due to the bookmarking in page 20, the subsequent pages 22 through 30 have been overlaid, thus simulating a real paper book experience.

In the example screen view identified by reference number 630, when a touch movement event that moves the first touch in a right direction as shown in the example screen view identified by reference number 640 is detected, the controller 110 may control to output the page 20 to which the first bookmark is added as shown in an example screen view identified by reference number 650. Thereafter, in the example screen view identified by reference number 650, the first bookmark may be deleted due to release of the first touch. On the other hand, since the third touch is maintained, the second bookmark is not deleted. In other words, in the example screen view identified by reference number 650, when a touch movement event that moves the third touch in a left direction is detected, the controller 110 may control to output the page 31 (in a reverse direction) to which the second bookmark is added on the screen.

Although not shown in FIGS. 6A and 6B, when a first touch release event is inputted in the example screen view identified by reference number 630, the controller 110 may delete the first bookmark, and when a second touch release event is inputted, the controller 110 may delete the second bookmark.

Also, although it is shown in FIGS. 6A and 6B that two pages are outputted on the screen when executing the electronic book content, the present invention is not limited to this. Namely, the portable terminal 100 may output one page or more depending, for example, on a screen size.

Also, although it is described in FIGS. 4A, 4B and 5 that one object (icon or an item, and the like) is selected by the first touch, the present invention is not limited thereto. For example, the user of the portable terminal according to certain embodiments of the present invention may enter into the editing mode by performing the long touch on multiple objects in the home screen or the list screen, and enter the touch movement event while maintaining the long touch on the multiple objects, thereby moving the screen.

Meanwhile, in the above, the embodiments of the present invention are described with respect to examples of the home screen, the list screen, and the electronic content execution screen. However, the present invention is not limited to these examples. For example, certain embodiments of the present invention may enter into the editing mode through a touch (long touch) on an image content (e.g., a photo) and cut a portion area of the image according to a second touch movement event that is inputted on the image content while the touch is maintained. In other words, when only a face needs to be cut from a picture of a whole figure, the user may enter into the editing mode by a touch (long touch) on the picture of the whole figure and cut a face area through the touch movement event corresponding to a gesture that draws a looped curve such as a circle to include a face.

The foregoing method for changing a screen size using a multi-touch of embodiments of the present invention may be implemented in an executable program command form by various computer means and be recorded in a computer readable recording medium. In this case, the computer readable recording medium may include a program command, a data file, and a data structure individually or a combination thereof. The program command recorded in a recording medium may be specially designed or configured for the present invention or be known to a person having ordinary skill in a computer software field to be used. The computer readable recording medium includes Magnetic Media, for example hard disk, floppy disk, or magnetic tape, Optical Media, for example Compact Disc Read Only Memory (CD-ROM) or Digital Versatile Disc (DVD), Magneto-Optical Media such as floptical disk, and a hardware device, for example ROM. RAM, flash memory storing and executing program commands. Further, the program command may include a machine language code created by a compiler and/or a high-level language code executable by a computer using an interpreter. The foregoing hardware device may be configured to be operated as at least one software module to perform an operation of the present invention.

As described above, in embodiments of the present invention, by using a multi touch comprising touches inputted at different time points, a portable terminal may be controlled more conveniently and intuitively. For example, embodiments of the present invention may individually perform a function of selecting an object (e.g., a specific icon on a home screen, a specific item on a list, or a specific page in an electronic book) and a function of moving a screen through a multi touch. In other words, in embodiments of the present invention, in a state where the first function is being performed according to a single touch or a multi touch, when a second touch is inputted, a second function may be performed. Namely, compared to the prior art where only one function can be performed at a time, in embodiments of the present invention, two functions may be performed according to a multi touch input inputted in a consecutive order, thereby improving user convenience.

As described above, in a method and an apparatus for providing a multi touch interaction of a portable terminal according to an exemplary embodiment of the present invention, a portable terminal may be controlled more conveniently and intuitively by using a multi touch comprising touches inputted at different time points. For example, in embodiments of the present invention, a first function may be performed through a first touch input and, when the first function is being executed, a second function may be performed through a second touch input. Accordingly, embodiments of the present invention may improve a user's experience and convenience.

It will be appreciated that embodiments of the present invention can be realized in the form of hardware, software or a combination of hardware and software. Any such software may be stored in the form of volatile or non-volatile storage, for example, a storage device like a ROM, whether erasable or rewritable or not, or in the form of memory, for example, RAM, memory chips, device or integrated circuits or on an optically or magnetically readable medium, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although exemplary embodiments of the present invention have been described in detail hereinabove, it should be clearly understood that many variations and modifications of the inventive concepts herein taught, which will occur to those skilled in the art, will still fall within the scope of the present invention, as defined by the appended claims.

## Claims

1. A method for providing a multi touch interaction for a portable terminal comprising a touch screen, the method comprising:
detecting a first touch input;
performing a first function corresponding to the detected first touch input;
detecting a second touch input while the first touch input is maintained; and
performing a second function corresponding to the detected second touch input.

2. The method of claim 1, wherein the second function comprises a function related to the first function.

3. The method of claim 2, wherein the first touch input comprises a touch event for selecting at least one specific object in a screen (e.g. a home screen or a list screen), and the first function comprises a function for editing the screen, and the second touch input comprises a touch movement event that is generated in the screen, and
the second function comprises a function for moving the screen corresponding to the touch movement event while maintaining a movement of the selected at least one specific object.

4. The method of claim 3, further comprising:
when the first touch input is released, changing a location of the at least one selected specific object to a location in which the first touch input is released.

5. The method of claim 2, 3 or 4, wherein the first touch input comprises a touch event for selecting at least one specific page in an electronic book content execution screen, and the first function comprises a function for adding a bookmark to the selected specific page, and the second touch input comprises a touch movement event for moving a page of an electronic book content, and the second function comprises a function for moving the page of the electronic book content corresponding to the touch movement event.

6. The method of claim 5, further comprising:
when the page is moved to a previous page or a next page and a touch movement event of the first touch input is inputted, moving to a page to which the bookmark is added.

7. The method of claim 5 or 6, further comprising:
when the first touch input is released, removing the bookmark added to the specific page.

8. An apparatus for providing a multi touch interaction for a portable terminal, comprising:
a touch panel; and
a controller configured for performing a first function corresponding to a first touch input detected on the touch panel, and configured for performing a second function corresponding to a second touch input when the second touch input is detected while the first touch input is maintained.

9. The apparatus of claim 8, wherein the second function comprises a function related to the first function.

10. The apparatus of claim 9, wherein the first touch input comprises a touch event for selecting at least one specific object in a screen (e.g. a home screen or a list screen), and the first function comprises a function for editing the screen, and the second touch input comprises a touch movement event that is generated in the screen, and the second function comprises a function for moving the screen corresponding to the touch movement event while maintaining a movement of the selected at least one specific object.

11. The apparatus of claim 10, wherein, when the first touch input is released, the controller is configured for changing a location of the selected at least one specific object to a location in which the first touch input is released.

12. The apparatus of claim 9, 10 or 11, wherein the first touch input comprises a touch event for selecting a specific page in an electronic book content execution screen, and the first function comprises a function for adding a bookmark to the selected specific page, and the second touch input comprises a touch movement event for moving a page of an electronic book content, and the second function comprises a function for moving the page of the electronic book content corresponding to the touch movement event.

13. The apparatus of claim 12, wherein, when the page is moved to a previous page or a next page and a touch movement event of the first touch input is inputted, the controller is configured for outputting to a page to which the bookmark is added.

14. The apparatus of claim 12 or 13, wherein, when the first touch input is released, the controller is configured for removing the bookmark added to the specific page.

15. A computer-readable storage medium encoded with instructions that, when executed, cause a device to execute the method of any of claims 1 to 7.
